# EUROPEAN PATENT SPECIFICATION

(11) **EP 2 041 946 B1**
(45) Date of publication and mention of the grant of the patent: **28.10.2009**
(21) Application number: 07768931.3
(22) Date of filing: 14.06.2007
(51) Int. Cl.: H04L 29/08

(54) **METHOD AND SYSTEM FOR ESTABLISHING A COMMUNICATION BETWEEN AN OBJECT, A USER DEVICE AND A SERVICE DEVICE**
VERFAHREN UND SYSTEM ZUM HERSTELLEN EINER KOMMUNIKATION ZWISCHEN EINEM OBJEKT, EINER BENUTZEREINRICHTUNG UND EINER SERVEREINRICHTUNG
PROCÉDÉ ET SYSTÈME POUR ÉTABLIR UNE COMMUNICATION ENTRE UN OBJET, UN DISPOSITIF UTILISATEUR ET UN DISPOSITIF DE SERVICE

(30) Priority: 28.06.2006 NO 20063023
(43) Date of publication of application: 01.04.2009
(73) Proprietor: Telenor ASA, 1331 Fornebu (NO)
(72) Inventor: HAUGLI, Hans-Christian, N-0286 Oslo (NO); MELBY, Elin, N-1357 Bekkestua (NO); NOLL, Josef, N-1084 Oslo (NO)
(74) Representative: Onsagers Ltd
(86) International application number: PCT/NO2007/000208
(87) International publication number: WO 2008/002146

(56) References cited:
- WO-A-2005/029776
- WO-A-2006/035315
- WO-A-2006/049742
- WO-A-2006/137740
- US-A1- 2004 203 352
- GHANNAME, TAOUFIK: "How NFC can to speed Bluetooth transactions?today"[Online] 14 February 2006 (2006-02-14), XP002458023 Retrieved from the Internet: URL:http://www.wirelessnetdesignline.com/s howArticle.jhtml?articleID=180203270> [retrieved on 2007-11-08]
- YOSHIDA, JUNKO: "EE Times: Near-field comms makes a splash at 3GSM"[Online] 16 February 2006 (2006-02-16), XP002458024 Retrieved from the Internet: URL:http://www.eetimes.com/conf/3gsm/showA rticle.jhtml?articleID=180203184&kc=6437> [retrieved on 2007-11-08]

## Description

### Field of the invention

The present invention relates to a method and a system for establishing a communication between an object, a user device and a service device.

### Background of the invention

RFID tags and other types of machine readable tags for tagging objects to be tracked are known in the art.

WO-2006/049742 discloses a mobile station which is enabled for WLAN communications, mobile communications such as GSM etc., and RFID communications. The mobile station is adapted to interrogate an RFID tag located on a service kiosk, receive data from the RFID tag, obtaining from the received data the address of a remote server and an identification, establishing a connection with the server, transmitting the identification to the server, and performing a transaction with the server.

### Summary of the invention

In accordance with a first aspect of the present invention, there is provided a method as defined in the appended independent claim 1.

In accordance with a second aspect of the present invention, there is provided a system as defined in the appended independent claim 14.

Further features of the invention are set forth in the dependent claims.

Additional features and principles of the present invention will be recognized from the detailed description.

It is to be understood that both the foregoing general description and the following detailed description are exemplary and explanatory only and are not restrictive of the invention, as claimed.

### Brief description of the drawings

The accompanying drawings illustrate the principles of the invention. In the drawings,
Fig. 1 is an exemplary block diagram illustrating an embodiment of a system in accordance with the invention,
Fig. 2 is a timing diagram illustrating a sequence of process steps in accordance with the invention, and
Fig. 3 is an exemplary flow chart illustrating a method in accordance with the invention.

### Detailed description of the invention

Reference will now be made in detail to the present invention, examples of which are illustrated in the accompanying drawings. Wherever possible, the same reference numbers will be used throughout the drawings to refer to the same or like parts.

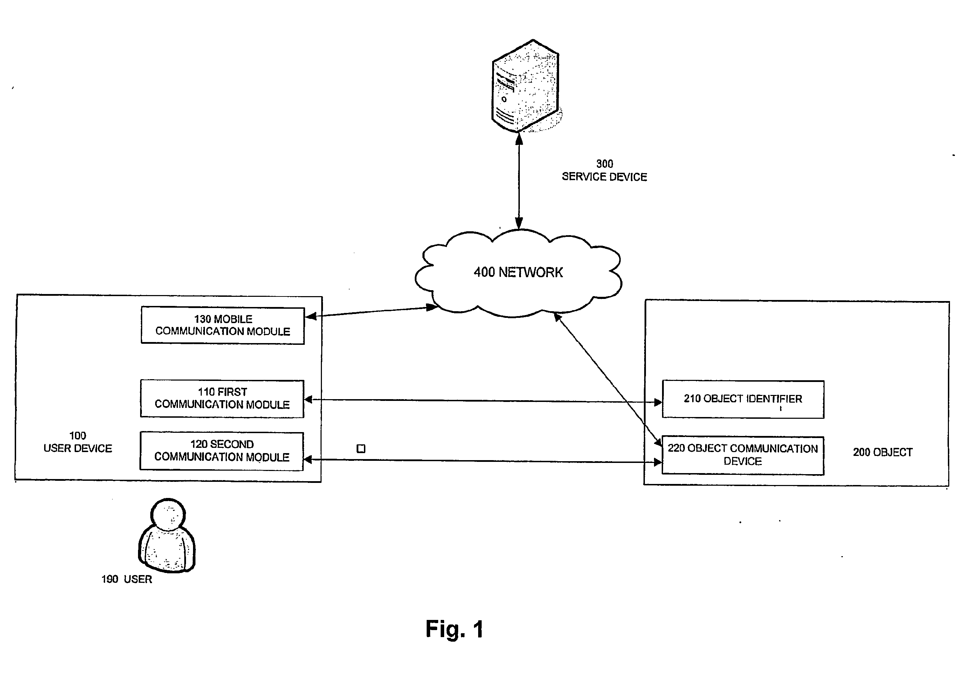

Fig. 1 is an exemplary block diagram illustrating the principles of a system in accordance with the invention.

### System

The system comprises three main elements: a user device (such as a mobile telephone) 100, an object (such as a vehicle 200), and a service device (such as a server) 300. The user device 100, the object 200 and the service device 300 are operatively interconnected by a communication network 400. The elements included in the system are described in closer detail below.

### User device 100

The user device 100 comprises a mobile communication module 130 for providing regular mobile communication capabilities, such as mobile telephony and message services, via a mobile communication network 400.

According to an embodiment the user device 100 is a mobile communication terminal such as a GSM/GPRS enabled mobile telephone. Alternatively, the user device may be another terminal type such as a smartphone, a PDA, or a portable personal computer. The user device 100 may alternatively be adapted for another type mobile communication, such as UMTS/3G or the like.

The user device 100 further comprises a first communication module 110 and a second communication module 120.

The first communication module 110 in the user device 100 is arranged to communicate with an object identifier 210 associated with an object 200. Advantageously, the first user communication device 110 is a local, short-range communication device, in particular a near field communication (NFC) communication device. Alternatively, the first user communication device 110 may be a Bluetooth, Zigbee, wireless USB, ultrawideband (UWB), or infrared type communication device.

The second communication module 120 in the user device is arranged to communicate with a communication module 220 in the object 200.

In an embodiment, the second communication module 120 is adapted for local, short-range communication type such as WiFi, i.e in compliance with the WLAN/IEEE 802.11 specification. Other possible local, short-range communication types include near field communication (NFC), Bluetooth, Zigbee, infrared, cable, RS232, Ethernet, or WiMax. Alternatively, the communication type is long-range, such as GSM. Other possible long-range communication types include UMTS/3G and satellite communication.

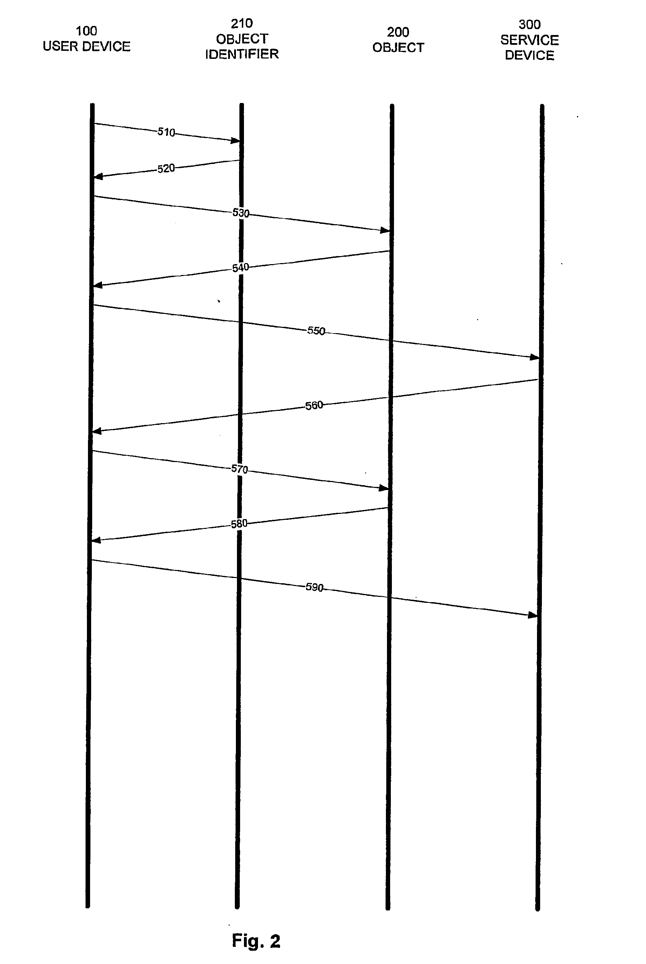

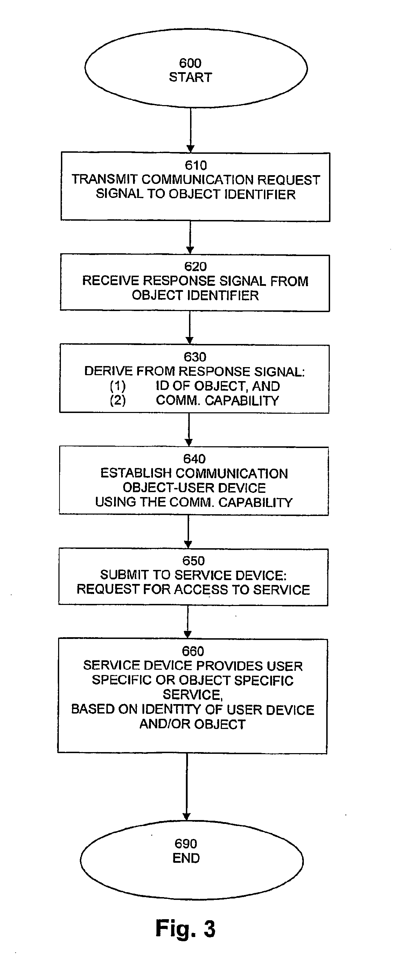

The above specification mainly describes the structural features of the user device 100. The user device 100 also includes dynamic features associated with is operation. In order to enable these dynamic features, the user device 100 further comprises a processing unit and a memory which contains processing instructions that enables the user device to perform a method, e.g. as described with reference to fig. 2 and fig. 3 below, when the instructions are executed by the processing device.

### Object 200

In general, the object 200 is any piece of equipment or a device that a user may look up or visit in order to initiate a communication.

By example, the object 200 may be a vehicle, such as a car, a bus or a tram. Other examples of objects are pieces of home equipment, such as a fridge, a television set, or a TV set-top box. Further examples of objects are public transport, traffic or energy equipment. A specific example of the latter is an electric generator in a power plant.

The object is associated with an object identifier 210. Advantageously, the object and the object identifier 210 are co-localised, e.g. the object 200 includes the object identifier 210. Alternatively, the object identifier 210 and the object are physically separate. For instance, the object 200 may be movable, while the object identifier 210 may have a fixed position.

In some cases, more than one object identifier 210 may be associated with one and the same object 200.

The object 200 further comprises an object communication device 220.

The object identifier 210 is arranged to carry information representing an identification of the object 200 and communication capabilities of the object 200. Such information is stored in a memory in the object identifier.

The object identifier 210 is also adapted for providing a response to a request submitted by the first communication module 110 in the user device 100. To this end, the object identifier 210 comprises communication device, for instance a short-range communication device such as a near field communication (NFC) device.

Alternatively, the object identifier 210 may be a Bluetooth, Zigbee, wireless USB, ultrawideband (UWB), or infrared type communication device.

The object identifier 210 is adapted, upon receiving a request signal from the first communication module 110 in the user device 100, to transmit a response signal.

The response signal comprises an identification of the object 200, which advantageously is unique for the object 200. The response signal further comprises information that describes a communication capability of the object 200. More specifically, the information describes a communication capability of the object communication device 220.

Advantageously, the communication capability of the object 200, in particular of the object communication device 220, is a short-range communication type such as WiFi, i.e WLAN/IEEE 802.11 communication. Other possible short-range communication types include near field communication (NFC), Bluetooth, Zigbee, infrared, cable, RS232, Ethernet, or WiMax.

Alternatively, the communication capability is a long-range communication type such as GSM. Other possible long-range communication types include UMTS/3G and satellite communication.

### Service device 300

Consistent with an embodiment, the service device 300 is a server which is operatively connected to the user device 100, the object 200 and the object identifier 210 by means of the communication network 400.

The service device is configured to provide at least one service to a user device or to an object. In an embodiment, the service device 300 is arranged to provide a plurality of services to both user devices and objects.

The service provided by the service device 300 may be a user centric service or an object centric service. A service device 300 may provide both user centric and object centric services.

User centric services include services that are utilised by the user and assisted either by object information or object related facilities. As an example, a user centric service may involve providing travel information based on the detected location of a car. Such travel information may e.g. be shown on a display included in a navigation system inside the car compartment.

Object centric services include services that are related to how an object can be operated. Examples include remote management control and equipment diagnostics.

The type of service provided by the service device 300 may be based on information received by the service device 300.

In particular, the service device 300 is arranged for transmitting a service provision signal as a response to a service request signal received by the service device. The service provision signal may be transmitted to a user device or to an object.

In the example where the object is a vehicle, the service may e.g. be selected from the following set of exemplary services:
- recording driving data, such as logging of driven distance by the identified user with the identified vehicle,
- uploading driving data, such as uploading navigational data to a navigation system in the vehicle,
- downloading data to the vehicle, such as downloading updates of computer software kept in a memory in a vehicle on-board computer, for instance a navigation system,
- payment/charging services.

Fig. 2 is a timing diagram illustrating a sequence of process steps in accordance with the invention.

The vertical lines in fig. 2 represent, from the left to the right: the user device 100, the object identifier 210 associated with the object 200, the object 200, and the service device 300.

In step 510 a communication request signal is transmitted by the user device 100 to the object identifier 210 that is associated with the object.

In step 520 a response signal is received by the user device 100 from the object identifier 210. The object identifier is arranged for transmitting such a response signal upon the communication request signal transmitted by the user device in step 510. The response signal includes an identification of the object 200 and information that describes a communication capability of the object.

In step 530 a communication request signal is transmitted by the user device 100 to the object 200.

In step 540 a communication acknowledgement signal is received by the user device 200 from the object 200. The object 200 is arranged for transmitting such an acknowledgement signal upon the communication request signal transmitted by the user device 100 in the above step 530.

In step 550 a service request signal is transmitted by the user device 100 to the service device 300. The service request signal includes information representing an identity of the user device, or the identity of said object, or both.

In step 560 a service provision signal is received by the user device 100 from the service device 300. Alternatively, a service provision signal could be received by the object 200 from the service device 300.

In step 570 an object service provision signal is transmitted by the user device 100 to the object 200.

In step 580 an object information provision signal is received by the user device from the object 200.

In step 590, an information provision signal is transmitted by the user device 100 to the service device 300.

Fig. 3 is an exemplary flow chart further illustrating a method in accordance with the invention. The description of the method should be read in conjunction with the description of the system illustrated previously with reference to figure 1.

A useful result of the method is that a communication is established between the object 200, the user device 100 and the service device 300. Further, a user specific or an object specific service provided by the service device 300 is made accessible to the user device 100 or the object 200.

The method is performed by the user device 100 by means of a processing device included in the user device 100. The method comprises the following steps:
The method starts at the initiating step 600.
Next, in step 610, a communication request signal is transmitted to the object identifier 210 associated with the object 200. In an embodiment, this step comprises the use of a short-range wireless communication type chosen from the group consisting of: near field communication (NFC), Bluetooth, Zigbee, wireless USB, ultrawideband (UWB), and infrared. Alternatively,

Next, in step 620, a response signal is received from the object identifier. The response signal comprises an identification of said object and information describing a communication capability of the object. In an embodiment, the communication capability of the object is a short-range communication type chosen from the group consisting of: near field communication (NFC), Bluetooth, Zigbee, infrared, cable, RS232, Ethernet, WiFi, and WiMax. Alternatively, the communication capability of the object is a long-range communication type chosen from the group consisting of: GSM, UMTS and satellite.

Next, in step 630, certain characteristics are derived from the response signal received in step 620. The characteristics include (1) the identification of the object and (2) the information describing the communication capability of the object.

Next, in step 640, a communication is established between the object 200 and the user device 100, using the described communication capability. In an embodiment, this step comprises to derive the identification of the object and the information that describes the communication capability from the response signal.

Further, in step 650, a request for access to a service is submitted to the service device 300. The service device is arranged for providing a service based on the identification of the object 200, or an identification of the user device 100, or both.

Next, in step 660, the service device 300 provides a user specific or an object specific service. The service is based on the identity of the user device, or the identity of the object, or both. The service device also transmits a service provision signal to the user device or the object, or both.

The method terminates at step 690.

Several modifications and adaptations of the present invention will be apparent to those skilled in the art from consideration of the specification and practice of the invention.

The above detailed description of the invention has been presented for purposes of illustration. It is not exhaustive and does not limit the invention to the precise form disclosed. Modifications and variations are possible in light of the above teachings or may be acquired from the practicing of the invention.

## Claims

1. Method for establishing communication between an object (200), a user device (100) and a service device (300),
the method comprising the steps of
- transmitting a communication request signal by the user device (100) to an object identifier (210) associated with said object (200);
- receiving a response signal by the user device (100) from said object identifier (210), the response signal including
- an identification of said object and
- information describing a communication capability of said object (200);
- establishing communication between said object (200) and said user device (100) using said communication capability;
- transmitting a service request signal to said service device (300), said service request signal including information representing at least one of
- an identity of said user device (100) and
- said identity of said object (200);
- receiving, by said user device (100) or said object (200), a service provision signal from said service device (300).

2. Method according to claim 1,
wherein said service provision signal is received by said user device (100).

3. Method according to claim 1,
wherein said service provision signal is received by said object (200).

4. Method according to claim 1,
wherein said service request signal includes information representing said identity of said user device (100).

5. Method according to claim 1,
wherein said service request signal includes information representing said identity of said object (200).

6. Method according to claim 1,
further comprising the steps of
- transmitting an object service provision signal to said object (200); and
- receiving an object information provision signal from said object (200).

7. Method according to claim 1,
wherein said user device (200) is a mobile communication device.

8. Method according to claim 7,
wherein said mobile communication device is a mobile communication terminal, a mobile telephone, a smartphone, a PDA, or a portable personal computer.

9. Method according to claim 1,
wherein said step of transmitting a communication request signal comprises the use of a short-range wireless communication type chosen from the group consisting of: near field communication (NFC), Bluetooth, Zigbee, wireless USB, ultrawideband (UWB), and infrared.

10. Method according to claim 9,
wherein said step of receiving a response signal comprises the use of said short-range wireless communication type.

11. Method according to claim 1,
wherein said communication capability of said object (200) is a short-range communication type chosen from the group consisting of: near field communication (NFC), Bluetooth, Zigbee, infrared, cable, RS232, Ethernet, WiFi, and WiMax.

12. Method according to claim 1,
wherein said communication capability of said object (200) is a long-range communication type chosen from the group consisting of: GSM, UMTS and satellite.

13. Method according to claim 1,
wherein said communication request signal is transmitted via a first communication module (110) in said user device (100), and wherein said communication between said object (200) and said user device (100) is established via a second communication module (120) in said user device (100).

14. System for establishing communication,
the system comprising a user device (100), an object (200) and a service device (300) which are communicatively interconnected,
the service device being arranged for transmitting a service provision signal to at least one of said user device (100) and said object (200) as a response to a service request signal,
the user device (100) comprising:
- a processing device, adapted for performing the steps of:
- transmitting a communication request signal to an object identifier (210) associated with said object (200);
- receiving a response signal from said object identifier (210), the response signal including
- an identification of said object (200) and
- information describing a communication capability of said object (200);
- establishing communication between said object (200) and said user device (100) using said communication capability;
- transmitting a service request signal to said service device (300), said service request signal including information representing at least one of
- an identity of said user device (100) and
- said identity of said object (200);
and wherein at least one of said user device (100) and said object (200) is adapted for
- receiving a service provision signal from said service device (300).

15. System according to claim 14,
wherein said service device (300) is arranged for transmitting said service provision signal to said user device (100) as a response to said service request signal.

16. System according to claim 14,
wherein said service device (300) is arranged for transmitting said service provision signal to said object (200) as a response to said service request signal.

17. System according to claim 14,
wherein said service request signal includes information representing said identity of said user device (100).

18. System according to claim 14,
wherein said service request signal includes information representing said identity of said object (200).

19. User device (100), comprising a processing device, adapted for performing all the steps of the method as claimed in claims 1 to 13 and wherein said processing device is adapted for performing the step of establishing communication between said object (200) and said user device (100) using said communication capability.

20. Set of processing instructions causing a user device (100) which includes a processing device to perform all the steps of the method as set forth in one of the claims 1-13 when the instructions are executed by the processing device.

## Patentansprüche

1. Verfahren zum Herstellen einer Kommunikation zwischen einem Objekt (200), einer Benutzereinrichtung (100) und einer Diensteinrichtung (300),
wobei das Verfahren die Schritte enthält:
Übertragen von einem Kommunikations-Anfragesignal durch die Benutzereinrichtung (100) an einen Objekt-Identifizierer (210) in Zusammenhang mit dem Objekt (200);
Empfangen von einem Antwortsignal durch die Benutzereinrichtung (100) von dem Objekt-Identifizierer (210), wobei das Antwortsignal enthält:
eine Identifikation von dem Objekt, und
eine Information, welche eine Kommunikations-Leistungsfähigkeit von dem Objekt (200) beschreibt;
Herstellen von einer Kommunikation zwischen dem Objekt (200) und der Benutzereinrichtung (100) unter Verwendung von der Kommunikations-Leistungsfähigkeit;
Übertragen von einem Dienst-Anfragesignal an die Diensteinrichtung (300), wobei das Dienst-Anfragesignal eine Information enthält, welche zumindest eines darstellt aus:
eine Identität von der Benutzereinrichtung (100), und
die Identität von dem Objekt (200);
Empfangen von einem Dienst-Bereitstellungssignal von der Diensteinrichtung (300) durch die Benutzereinrichtung (100) oder das Objekt (200).

2. Verfahren nach Anspruch 1,
bei welchem das Dienst-Bereitstellungssignal durch die Benutzereinrichtung (100) empfangen wird.

3. Verfahren nach Anspruch 1,
bei welchem das Dienst-Bereitstellungssignal durch das Objekt (200) empfangen wird.

4. Verfahren nach Anspruch 1,
bei welchem das Dienst-Anfragesignal eine Information enthält, welche die Identität von der Benutzereinrichtung (100) darstellt.

5. Verfahren nach Anspruch 1,
bei welchem das Dienst-Anfragesignal eine Information enthält, welche die Identität von dem Objekt (200) darstellt.

6. Verfahren nach Anspruch 1,
welches ferner die Schritte enthält:
Übertragen von einem Objekt-Dienst-Bereitstellungssignal an das Objekt (200); und
Empfangen von einem Objekt-Information-Bereitstellungssignal von dem Objekt (200).

7. Verfahren nach Anspruch 1,
bei welchem die Benutzereinrichtung (200) eine Mobil-Kommunikationseinrichtung ist.

8. Verfahren nach Anspruch 7,
bei welchem die Mobil-Kommunikationseinrichtung ein Mobil-Kommunikations-Endgerät, ein Mobiltelefon, ein Smartphone, ein PDA oder ein tragbarer Computer ist.

9. Verfahren nach Anspruch 1,
bei welchem der Schritt des Übertragens von einem Kommunikations-Anfragesignal die Verwendung von einem Kurzbereichs-Drahtlos-Kommunikationstyp enthält, welcher aus der Gruppe ausgewählt ist, welche enthält: Nahfeld-Kommunikation (NFC), Bluetooth, Zigbee, Drahtlos-USB, Ultrabreitband (UWB) und Infrarot.

10. Verfahren nach Anspruch 9,
bei welchem der Schritt des Empfangens eines Antwortsignals die Verwendung von dem Kurzbereichs-Drahtlos-Kommunikationstyp enthält.

11. Verfahren nach Anspruch 1,
bei welchem die Kommunikations-Leistungsfähigkeit von dem Objekt (200) ein Kurzbereichs-Kommunikationstyp ist, welcher aus der Gruppe ausgewählt ist, welche enthält: Nahfeld-Kommunikation (NFC), Bluetooth, Zigbee, Infrarot, Kabel, RS232, Ethernet, WiFi und WiMax.

12. Verfahren nach Anspruch 1,
bei welchem die Kommunikations-Leistungsfähigkeit von dem Objekt (200) ein Weitbereichs-Kommunikationstyp ist, welcher aus der Gruppe ausgewählt ist, welche enthält: GSM, UMTS und Satellit.

13. Verfahren nach Anspruch 1,
bei welchem das Kommunikations-Anfragesignal über ein erstes Kommunikationsmodul (110) in der Benutzereinrichtung (100) übertragen wird, und bei welchem die Kommunikation zwischen dem Objekt (200) und der Benutzereinrichtung (100) über ein zweites Kommunikationsmodul (120) in der Benutzereinrichtung (100) hergestellt wird.

14. System zum Herstellen von einer Kommunikation,
wobei das System eine Benutzereinrichtung (100), ein Objekt (200) und eine Diensteinrichtung (300) enthält, welche zur Kommunikation verbunden sind,
wobei die Diensteinrichtung dazu ausgelegt ist, um ein Dienst-Bereitstellungssignal an die Benutzereinrichtung (100) und/oder das Objekt (200) als eine Antwort auf ein Dienst-Anfragesignal zu übertragen,
wobei die Benutzereinrichtung (100) enthält:
eine Verarbeitungseinrichtung, welche dazu ausgelegt ist, um die Schritte durchzuführen:
Übertragen von einem Kommunikations-Anfragesignal an einen Objekt-Identifizierer (210) in Zusammenhang mit dem Objekt (200);
Empfangen von einem Antwortsignal von dem Objekt-Identifizierer (210), wobei das Antwortsignal enthält:
eine Identifikation von dem Objekt (200), und
eine Information, welche eine Kommunikations-iweistungsfähigkeit von dem Objekt (200) beschreibt;
Herstellen von einer Kommunikation zwischen dem Objekt (200) und der Benutzereinrichtung (100) unter Verwendung von der Kommunikations-Leistungsfähigkeit;
Übertragen von einem Dienst-Anfragesignal an die Diensteinrichtung (300), wobei das Dienst-Anfragesignal eine Information enthält, welche zumindest eines darstellt aus:
eine Identität von der Benutzereinrichtung (100), und
die Identität von dem Objekt (200);
und wobei die Benutzereinrichtung (100) und/oder das Objekt (200) dazu ausgelegt sind, um:
ein Dienst-Bereitstellungssignal von der Diensteinrichtung (300) zu empfangen.

15. System nach Anspruch 14,
bei welchem die Diensteinrichtung (300) dazu ausgelegt ist, um das Dienst-Bereitstellungssignal an die Benutzereinrichtung (100) als eine Antwort auf das Dienst-Anfragesignal zu übertragen.

16. System nach Anspruch 14,
bei welchem die Diensteinrichtung (300) dazu ausgelegt ist, um das Dienst-Bereitstellungssignal an das Objekt (200) als eine Antwort auf das Dienst-Anfragesignal zu übertragen.

17. System nach Anspruch 14,
bei welchem das Dienst-Anfragesignal eine Information enthält, welche die Identität von der Benutzereinrichtung (100) darstellt.

18. System nach Anspruch 14,
bei welchem das Dienst-Anfragesignal eine Information enthält, welche die Identität von dem Objekt (200) darstellt.

19. Benutzereinrichtung (100), welche eine Verarbeitungseinrichtung enthält, welche dazu ausgelegt ist, um alle Schritte des Verfahrens nach einem der Ansprüche 1 bis 13 durchzuführen, und wobei die Verarbeitungseinrichtung dazu ausgelegt ist, um den Schritt zum Herstellen einer Kommunikation zwischen dem Objekt (200) und der Benutzereinrichtung (100) unter Verwendung von der Kommunikations-Leistungsfähigkeit durchzuführen.

20. Verarbeitungs-Instruktionssatz, welcher eine Benutzereinrichtung (100), welche eine Verarbeitungseinrichtung enthält, dazu bewirkt, um alle Schritte des Verfahrens nach einem der Ansprüche 1 bis 13 durchzuführen, wenn die Instruktionen durch die Verarbeitungseinrichtung ausgeführt werden.

## Revendications

1. Procédé pour établir une communication entre un objet (200), un dispositif d'utilisateur (100) et un dispositif de service (300),
le procédé comprenant les étapes consistant à :
■ émettre un signal de demande de communication par le dispositif d'utilisateur (100) vers un identifiant d'objet (210) associé audit objet (200) ;
■ recevoir un signal de réponse par le dispositif d'utilisateur (100) dudit identifiant d'objet (210), le signal de réponse comprenant :
■ une identification dudit objet ; et
■ des informations décrivant une capacité de communication dudit objet (200) ;
■ établir une communication entre ledit objet (200) et ledit dispositif d'utilisateur (100) en utilisant ladite capacité de communication ;
■ émettre un signal de demande de service vers ledit dispositif de service (300), ledit signal de demande de service comprenant des informations représentant au moins l'une
■ d'une identité dudit dispositif d'utilisateur (100) ; et
■ de ladite identité dudit objet (200) ;
■ recevoir, par ledit dispositif d'utilisateur (100) ou ledit objet (200), un signal de fourniture de service dudit dispositif de service (300).

2. Procédé selon la revendication 1, dans lequel ledit signal de fourniture de service est reçu par ledit dispositif d'utilisateur (100).

3. Procédé selon la revendication 1, dans lequel ledit signal de fourniture de service est reçu par ledit objet (200).

4. Procédé selon la revendication 1, dans lequel ledit signal de demande de service comprend des informations représentant ladite identité dudit dispositif d'utilisateur (100).

5. Procédé selon la revendication 1, dans lequel ledit signal de demande de service comprend des informations représentant ladite identité dudit objet (200).

6. Procédé selon la revendication 1, comprenant en outre les étapes consistant à :
■ émettre un signal de fourniture de service d'objet vers ledit objet (200) ; et
■ recevoir un signal de fourniture d'informations d'objet dudit objet (200).

7. Procédé selon la revendication 1, dans lequel ledit dispositif d'utilisateur (100) est un dispositif de communication mobile.

8. Procédé selon la revendication 7, dans lequel ledit dispositif de communication mobile est un terminal de communication mobile, un téléphone mobile, un téléphone intelligent, un PDA, ou un ordinateur personnel portable.

9. Procédé selon la revendication 1, dans lequel ladite étape d'émission d'un signal de demande de communication comprend l'utilisation d'un type de communication sans fil à courte distance choisi dans le groupe consistant en : une communication de champ proche (NFC), Bluetooth, Zigbee, USE sans fil, ultra large bande (UWB) et infrarouge.

10. Procédé selon la revendication 9, dans lequel ladite étape de réception d'un signal de réponse comprend l'utilisation dudit type de communication sans fil à courte distance.

11. Procédé selon la revendication 1, dans lequel ladite capacité de communication dudit objet (200) est un type de communication à courte distance choisi dans le groupe consistant en : une communication de champ proche (NFC), Bluetooth, Zigbee, infrarouge, par câble, RS232, Ethernet, WiFi et WiMax.

12. Procédé selon la revendication 1, dans lequel ladite capacité de communication dudit objet (200) est un type de communication à longue distance choisi dans le groupe consistant en : GSM, UMTS et par satellite.

13. Procédé selon la revendication 1, dans lequel ledit signal de demande de communication est émis par l'intermédiaire d'un premier module de communication (110) dans ledit dispositif d'utilisateur (100), et dans lequel ladite communication entre ledit objet (200) et ledit dispositif d'utilisateur (100) est établie par l'intermédiaire d'un deuxième module de communication (120) dans ledit dispositif d'utilisateur (100).

14. Système pour établir une communication,
■ le système comprenant un dispositif d'utilisateur (100), un objet (200) et un dispositif de service (300) qui sont interconnectés de manière communicante,
■ le dispositif de service étant agencé pour émettre un signal de fourniture de service vers au moins l'un dudit dispositif d'utilisateur (100) et dudit objet (200) en réponse à un signal de demande de service,
■ le dispositif d'utilisateur (100) comprenant :
■ un dispositif de traitement, adapté pour effectuer les étapes consistant à :
■ émettre un signal de demande de communication vers un identifiant d'objet (210) associé audit objet (200) ;
■ recevoir un signal de réponse dudit identifiant d'objet (210), le signal de réponse comprenant :
■ une identification dudit objet (200) ; et
■ des informations décrivant une capacité de communication dudit objet (200) ;
■ établir une communication entre ledit objet (200) et ledit dispositif d'utilisateur (100) en utilisant ladite capacité de communication ;
■ émettre un signal de demande de service vers ledit dispositif de service (300), ledit signal de demande de service comprenant des informations représentant au moins l'une
■ d'une identité dudit dispositif d'utilisateur (100) ; et
■ de ladite identité dudit objet (200) ;
et dans lequel au moins l'un dudit dispositif d'utilisateur (100) et dudit objet (200) est adapté pour
■ recevoir un signal de fourniture de service dudit dispositif de service (300).

15. Système selon la revendication 14, dans lequel ledit dispositif de service (300) est agencé pour émettre ledit signal de fourniture de service vers ledit dispositif d'utilisateur (100) en tant que réponse audit signal de demande de service.

16. Système selon la revendication 14, dans lequel ledit dispositif de service (300) est agencé pour émettre ledit signal de fourniture de service vers ledit objet (200) en tant que réponse audit signal de demande de service.

17. Système selon la revendication 14, dans lequel ledit signal de demande de service comprend des informations représentant ladite identité dudit dispositif d'utilisateur (100).

18. Système selon la revendication 14, dans lequel ledit signal de demande de service comprend des informations représentant ladite identité dudit objet (200).

19. Dispositif d'utilisateur (100) comprenant un dispositif de traitement, adapté pour effectuer toutes les étapes du procédé selon les revendications 1 à 13, et dans lequel ledit dispositif de traitement est adapté pour effectuer l'étape d'établissement d'une communication entre ledit objet (200) et ledit dispositif d'utilisateur (100) en utilisant ladite capacité de communication.

20. Jeu d'instructions de traitement amenant un dispositif d'utilisateur (100) qui comprend un dispositif de traitement à effectuer toutes les étapes du procédé selon les revendications 1 à 13 lorsque les instructions sont exécutées par le dispositif de traitement.
